# EUROPÄISCHE PATENTSCHRIFT

(11) **EP 1 490 249 B1**
(45) Veröffentlichungstag und Bekanntmachung des Hinweises auf die Patenterteilung: **04.01.2006**
(21) Anmeldenummer: 03722383.1
(22) Anmeldetag: 02.04.2003
(51) Int. Cl.: B60T 8/40, B60T 8/48

(54) **VERFAHREN ZUR VERBESSERUNG DES REGELVERHALTENS VON KRAFTFAHRZEUGREGELUNGSSYSTEMEN**
METHOD FOR IMPROVING THE REGULATORY BEHAVIOUR OF MOTOR VEHICLE REGULATORY SYSTEMS
PROCEDE POUR AMELIORER LE FONCTIONNEMENT REGULATEUR DE SYSTEMES DE REGULATION DE VEHICULES A MOTEUR

(30) Priorität: 03.04.2002 DE 10214748; 05.03.2003 DE 10309418
(43) Veröffentlichungstag der Anmeldung: 29.12.2004
(73) Patentinhaber: Continental Teves AG & Co. oHG, 60488 Frankfurt am Main (DE)
(72) Erfinder: GRONAU, Ralph, 35083 Wetter (DE); WOYWOD, Jürgen, 64546 Mörfelden (DE)
(86) Internationale Anmeldenummer: PCT/EP2003/003426
(87) Internationale Veröffentlichungsnummer: WO 2003/082645

(56) Entgegenhaltungen:
- DE-A- 3 930 890
- DE-A- 3 936 386
- DE-A- 4 222 954
- DE-A- 4 232 614
- DE-A- 4 440 517
- DE-A- 19 632 311
- DE-A- 19 708 142
- DE-A- 19 816 290

## Beschreibung

Die Erfindung betrifft ein Verfahren zur Verbesserung des Regelverhaltens von Kraftfahrzeugregelungssystemen gemäß Oberbegriff von Anspruch 1, sowie ein Computerprogrammprodukt gemäß Anspruch 6.

Aus der gattungsbildenden DE 19632311 A1 ist eine Regelstrategie zur Pumpenansteuerung bekannt, die auf einem Druckvolumenmodell basiert, wobei die Pumpenansteuerung unter dem Aspekt der Niederdruckspeicher-Entleerungs-Priorität betrieben wird. Hierbei wird die Förderleistung der Hydraulikpumpe so bemessen, dass die Zeitspanne zwischen zwei aufeinanderfolgenden Bremsdruckabbauphasen zum vollständigen Entleeren der Niederdruckspeicher genügt.

Die bekannte Pumpenansteuerung führt zu Einbußen im Pedalkomfort, da der Fördervolumenstrom nicht mit dem benötigten Bedarfsvolumenstrom (Druckaufbaupulse) bilanziert wird. Speziell in Situationen, in denen keine Gefahr der Niederdruckspeicherbefüllung gegeben ist, oder wenn der Vordruck nur gering über dem Blockierdruckniveau liegt, ist eine solche herkömmliche Pumpenansteuerung unkomfortabel und verschlechtert sogar die Regelgüte (z. B. auf Niedrigreibwert), da durch eine nicht bilanzierte Rückförderung der Vordruck stark verändert wird. Diese Veränderung des Vordrucks führt zu dem bekannten Vibrieren des Bremspedals bei einem ABS-Eingriff. Das Vibrieren resultiert daraus, dass das Bremspedal bei einem regelungsbedingten Druckaufbau wegen des Volumenverbrauchs in Richtung Fahrzeugboden wandert und überlagert von der Förderpumpentätigkeit in entgegengesetzter Richtung, also gegen den Fahrerfuß, bewegt wird.

Daher ist es Aufgabe der Erfindung ein Verfahren bereitzustellen, welches durch eine gezielte Pumpenansteuerung eine ungewollte Bewegung (Vibrieren) des Bremspedals während eines ABS-Eingriffs signifikant reduziert, so dass eine Erhöhung des Pedalkomforts und eine Verbesserung der Regelgüte insbesondere in Niedrigreibwertsituationen erreicht wird.

Diese Aufgabe wird erfindungsgemäß durch das Verfahren nach Anspruch 1 gelöst.

Bevorzugt ist nach dem Verfahren der Erfindung, dass der kritische Füllstand des Niederdruckspeichers abhängig von fahrzeugspezifischen Bedingungen, wie z. B. Schlupfverlauf, Radbeschleunigung, Vordruck, Blockierdruckniveau, etc., festgelegt wird. Ganz besonders bevorzugt wird der kritische Füllstand des Niederdruckspeichers mittels Kennlinien festgelegt.

Weiterhin ist es bevorzugt, dass bei einer Druckaufbauphase das Druckmittel durch die Hydraulikpumpen aus den Niederdruckspeichern derart in den Hauptzylinder rückgefördert wird, dass der benötigte Bedarfsvolumenstrom der Radbremse weitestgehend von dem Fördervolumenstrom der Hydraulikpumpe bereitgestellt wird, so dass eine ungewollte Pedalbewegung aufgrund von Volumenstromdifferenzen minimiert wird.

Es ist außerdem bevorzugt, dass der Bedarfsvolumenstrom der Radbremse in Form von Volumenkennlinien abgelegt wird.

Die Hydraulikpumpe wird vorzugsweise abhängig von den Volumenkennlinien angesteuert wird.
Die Erfindung betrifft außerdem ein Computerprogrammprodukt, welches das erfindungsgemäße Verfahren umfasst.

Weitere Merkmale und Vorteile des erfindungsgemäßen Verfahrens gehen aus der nachfolgenden Beschreibung der einzigen Figur hervor.

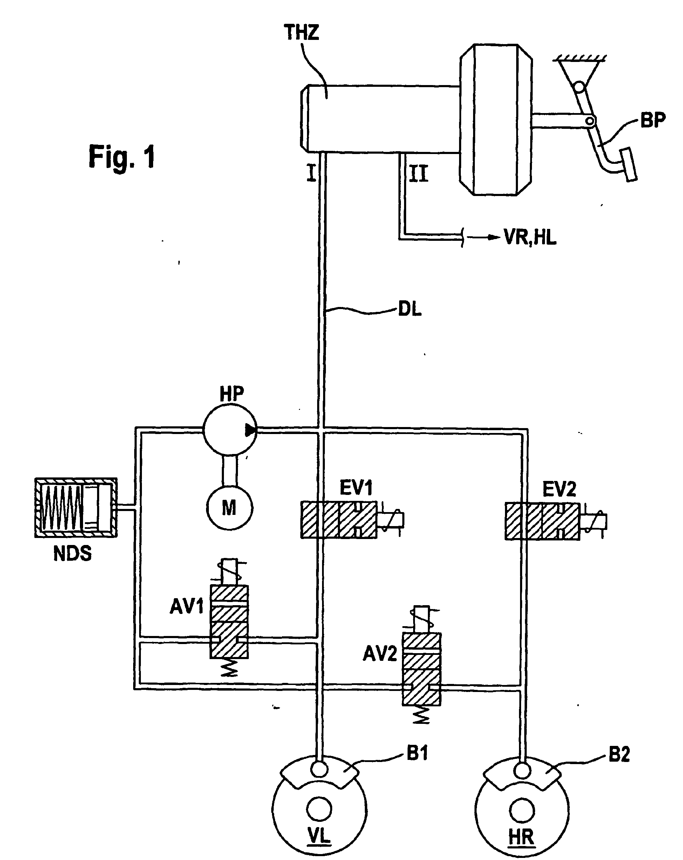

Fig. 1 zeigt hierbei einen schematischen Aufbau eines Bremskreises eines Fahrzeugs mit ABS-Regelung.

Aus Gründen der Übersichtlichkeit ist in Fig. 1 nur einer der üblicherweise zwei Bremskreise dargestellt. An einem Tandemhauptzylinder THZ sind zwei Bremskreise I, II angeschlossen. Bei der hier gezeigten Ausführungsform sind die Radbremse B1 des vorderen linken Rad VL und die Radbremse B2 des hinteren rechten Rads HR an dem Bremskreis I angeschlossen. Eine Aufteilung der Bremskreise nach Vorder- und Hinterachse ist selbstverständlich auch möglich. In den Druckmittelleitungen DL zwischen dem Tandemhauptzylinder THZ und den Radbremsen B1, B2 befinden sich Einlassventile EV1, EV2, die als SO-Ventile (SO: stromlos offen) ausgeführt sind. Diese Einlassventile EV1, EV2 können bei einem ABS-Regeleingriff geschlossen werden, um einen weiteren Druckaufbau in der Radbremse durch den Tandemhauptzylinder THZ temporär zu unterbinden. Ist ein Druckabbau bei der ABS-Regelung notwendig, so kann das überschüssige Druckmittel über Auslassventile AV1, AV2 abgebaut werden. Die Auslassventile AV1, AV2 sind hierbei als SG-Ventile (SG: stromlos geschlossen) ausgeführt. Das überschüssige Druckmittel wird hierbei in einem Niederdruckspeicher NDS zwischengespeichert und durch eine, mit einem Motor M angetriebene, Hydraulikpumpe HP vor die Einlassventile EV1, EV2 rückgefördert, wobei eine Rückförderung des Druckmittels nur erfolgt, wenn eine Druckaufbauphase bzw. ein Druckaufbau über das Einlassventil einsetzt oder ein kritischer Füllstand des Niederdruckspeichers NDS eine Ansteuerung der Hydraulikpumpe aus Sicherheitsgründen erforderlich macht. Aus dem durch einen Drucksensor (z. B. im THZ) oder durch Druckmodellbildung wird der zu erwartende Druckaufbau bzw. der zu erwartende Aufbaugradient der Radbremsen B1, B2 errechnet. Diese Funktion wird bereits genutzt, um den modellhaft nachgebildeten Raddruck zu bestimmen, wobei der Druckaufbau in Form von Volumenkennlinien ebenfalls abgelegt ist. Der Volumenstrom der Hydraulikpumpe HP ist bei den verschiedenen Ansteuerungen ebenfalls bekannt bzw. abschätzbar. Aus den abgelegten Volumenkennlinie der Radbremsen B1, B2 wird nun die benötigte Pumpenansteuerung berechnet.

Die Ansteuerung erfolgt unter Berücksichtigung des Nachlaufs der Hydraulikpumpe HP, wenn diese noch einen ausreichenden Volumenstrom erbringt. Der Nachlauf der Hydraulikpumpe HP wird bei ansteigendem Vordruck immer weniger berücksichtigt, um eine Rückförderung bei hohem Pedalgegendruck (durch den Fahrerfuß) sicherzustellen. Bei niedrigen Vordrücken wird der Nachlauf zum Problem, wenn eine Ansteuerung direkt vor einer Druckabbauphase initiiert wird. Dies ist speziell dann der Fall, wenn Schlupfeinläufe an mehreren Rädern vorliegen. In dieser Situation wird ein sich ankündigender Druckabbau (Einlassventile geschlossen) durch Auswertung der Radbeschleunigung und/oder Schlupfverläufe erkannt (ACCF-Response, Pausenverdopplung) und es kann die Pumpenansteuerung unterdrückt werden, so dass der Nachlauf nicht in die Abbauphase läuft.

Die reduzierte Ansteuerung der Hydraulikpumpe HP bzw. die Unterdrückung der Ansteuerung hat auf niedrigen Reibwerten, in Verbindung mit nur gering über dem Blockierdruckniveau liegenden Vordrücken, auch einen entscheidenden regelungstechnischen Vorteil. In dieser Situation wird ein Vordruckanstieg durch die Rückförderung vermieden, da kein Druckmittel vor die Einlassventile gebracht wird, welches in dieser Situation durch die Förderung "gegen den Fahrervordruck" eine, in Relation zum vorliegenden Blockierdruckniveau, starke THZ Druckerhöhung zur Folge hätte. Damit wird die Aufbauberechnung, die die vorangegangene Aufbauphase zur Grundlage der Berechnung hat, nicht gestört und es kommt nicht zu einem Wechsel aus sehr langen gefolgt von sehr kurzen Aufbauphasen. Dies steigert den Pedalkomfort, sowie die Homogenität der Verzögerung.

Eine Teilbefüllung des Niederdruckspeichers NDS kann hier über längere Zeit akzeptiert werden, da auf Niedrigreibwert kein Sprung auf einen deutlich niedrigeren Reibwert erfolgen kann. Erst wenn die modellhaft nachgebildeten, oder gemessenen Raddrücke einen Wert von nahezu Null zeigen, ohne das eine entsprechende Radwiederbeschleunigung detektiert wird, wird diese komfortorientierte Pumpenansteuerung verlassen und die bekannte Ansteuerung aktiviert.

## Patentansprüche

1. Verfahren zur Verbesserung des Regelverhaltens von Kraftfahrzeugregelungssystemen, wie ABS, ESP etc., die elektrisch angetriebene Hydraulikpumpen (HP), Einlass- und Auslassventile (EV1, EV2, AV1, AV2) sowie Niederdruckspeicher (NDS) umfassen, wobei die Niederdruckspeicher (NDS) Druckmittel, das im Regelfall aus Radbremsen (B1, B2) abgeleitet wird, zumindest zum Teil aufnehmen, bei dem mit Hilfe der Hydraulikpumpen (HP) das Druckmittel in einen Hauptzylinder (HZ), insbesondere Tandemhauptzylinder (THZ), rückgefördert wird, wobei in Abhängigkeit von gemessenen Druckwerten, z. B. Vordruck eines Bremspedals (BP), und/oder von errechneten oder geschätzten Druckwerten, nämlich durch Modellbildung auf Basis der Ventilbetätigung, des Regelungsverlaufs etc. gewonnenen Werten, das Förderverhalten und/oder das Fördervolumen der Hydraulikpumpen (HP) gesteuert oder geregelt wird, und wobei die Ansteuerung der Hydraulikpumpen (HP) bedarfsgerecht, d. h. unter Auswertung von Radbeschleunigung und/oder Schlupfverlauf erfolgt, **dadurch gekennzeichnet, dass** bei einer Druckabbauphase das Druckmittel in den Niederdruckspeichern (NDS) zwischengespeichert wird und solange keine Rückförderung des Druckmittels in den Hauptzylinder (HZ) erfolgt, bis entweder eine Druckaufbauphase einsetzt oder ein kritischer Füllstand des Niederdruckspeichers (NDS) eine Ansteuerung der Hydraulikpumpen (HP) aus Sicherheitsgründen erforderlich macht, wodurch eine Bilanzierung des Bedarfsvolumenstroms und des Fördervolumenstroms erfolgt und somit eine Verringerung von Vibrationen des Bremspedals (BP) erreicht wird.

2. Verfahren nach Anspruch 1, **dadurch gekennzeichnet, dass** der kritische Füllstand des Niederdruckspeichers (NDS) abhängig von fahrzeugspezifischen Bedingungen, wie z. B. Schlupfverlauf, Radbeschleunigung, Vordruck, Blockierdruckniveau, etc., insbesondere mittels Kennlinien, festgelegt wird.

3. Verfahren nach Anspruch 1 oder 2, **dadurch gekennzeichnet, dass** bei einer Druckaufbauphase das Druckmittel durch die Hydraulikpumpen (HP) aus den Niederdruckspeichern (NDS) derart in den Hauptzylinder (HZ) rückgefördert wird, dass der benötigte Bedarfsvolumenstrom der Radbremse (B1, B2) weitestgehend von dem Fördervolumenstrom der Hydraulikpumpe (HP) bereitgestellt wird, so dass möglichst geringe Pedalbewegungen aufgrund von Volumenstromdifferenzen erfolgen.

4. Verfahren nach einem der Ansprüche 1 bis 3, **dadurch gekennzeichnet, dass** der Bedarfsvolumenstrom der Radbremse (B1, B2) in Form von Volumenkennlinien abgelegt wird.

5. Verfahren nach einem der Ansprüche 1 bis 4, **dadurch gekennzeichnet, dass** die Hydraulikpumpe (HP) abhängig von den Volumenkennlinien angesteuert wird.

6. Computerprogrammprodukt, **dadurch gekennzeichnet, dass** dieses einen Algorithmus definiert, welcher ein Verfahren gemäß mindestens einem der Ansprüche 1 bis 5 umfasst.

## Claims

1. Method for improving the control behavior of motor vehicle control systems such as ABS, ESP, etc. comprising electrically driven hydraulic pumps (HP), inlet and outlet valves (EV1, EV2, AV1, AV2) and low-pressure accumulators (NDS), wherein the low-pressure accumulators (NDS) accommodate, at least in part, pressure fluid that is discharged from wheel brakes (B1, B2) in a control operation, wherein the hydraulic pumps (HP) are used to return the pressure fluid into a master cylinder (HZ), in particular tandem master cylinder (THZ), wherein the delivery behavior and/or the delivery volume of the hydraulic pumps (HP) is controlled or regulated in dependence on measured pressure values, e.g. pilot pressure of a brake pedal (BP), and/or on calculated or assessed pressure values, namely by producing a model from values acquired on the basis of the valve actuation, the control variation etc., and wherein the actuation of the hydraulic pumps (HP) takes place in conformity with demand, i.e. by evaluating wheel acceleration and/or slip variation,
**characterized in that** in a pressure decrease phase, the pressure fluid is intermediately stored in the low-pressure accumulators (NDS) and there is no return delivery of the pressure fluid into the master cylinder (HZ) until either a pressure increase phase commences, or a critical filling level of the low-pressure accumulator (NDS) necessitates actuation of the hydraulic pumps (HP) for safety reasons, with the result of balancing the volume flow demand and the delivery volume flow and thus achieving a reduction of vibrations of the brake pedal (BP).

2. Method as claimed in claim 1,
**characterized in that** the critical filling level of the low-pressure accumulator (NDS) is fixed in response to vehicle-related conditions such as the variation of slip, wheel acceleration, pilot pressure, locking pressure level, etc., in particular by means of characteristic curves.

3. Method as claimed in claim 1 or 2,
**characterized in that** in a pressure increase phase, the pressure fluid is returned by means of the hydraulic pumps (HP) from the low-pressure accumulators (NDS) into the master cylinder (HZ) in such a fashion that the volume flow demand of the wheel brake (B1, B2) is provided to the greatest possible extent by the delivery volume flow of the hydraulic pump (HP) so that pedal movements due to volume flow differences are greatly minimized.

4. Method as claimed in any one of claims 1 to 3,
**characterized in that** the volume flow demand of the wheel brake (B1, B2) is stored in the form of volume characteristic curves.

5. Method as claimed in any one of claims 1 to 4,
**characterized in that** the hydraulic pump (HP) is actuated in response to the volume characteristic curves.

6. Computer program product,
**characterized in that** said product defines an algorithm comprising a method as claimed in at least one of claims 1 to 5.

## Revendications

1. Procédé pour améliorer le comportement en régulation de systèmes de régulation de véhicule automobile, tels que ABS, ESP, etc., qui comportent des pompes hydrauliques (HP) entraînées électriquement, des soupapes d'admission et d'échappement (EV1, EV2, AV1, AV2) ainsi que des accumulateurs basse pression (NDS), les accumulateurs basse pression (NDS) recevant au moins en partie un fluide sous pression, qui en règle générale est dérivé des freins des roues (B1, B2), par lequel, à l'aide des pompes hydrauliques (HP) le fluide sous pression est refoulé dans un cylindre principal (HZ), en particulier un cylindre principal tandem (THZ), le comportement de refoulement et/ou le volume de refoulement des pompes hydrauliques (HP) étant commandés ou régulés en fonction de valeurs mesurées de la pression, par exemple pression initiale d'une pédale de frein (BP), et/ou de valeurs calculées ou estimées de la pression, notamment de valeurs obtenues par formation d'un modèle sur la base de l'actionnement de la soupape, de l'allure de la régulation, etc., et la commande des pompes hydrauliques (HP) s'effectuant en fonction des besoins, c'est-à-dire par exploitation de l'accélération des roues et/ou de l'allure du glissement, **caractérisé en ce qu'**au cours d'une phase de réduction de la pression le fluide sous pression est stocké de manière provisoire dans les accumulateurs basse pression (NDS) et, tant que le fluide sous pression n'est pas refoulé dans le cylindre principal (HZ), soit jusqu'à ce qu'il s'instaure une phase de montée en pression soit jusqu'à ce qu'un niveau critique de l'accumulateur basse pression (NDS) rende nécessaire une commande des pompes hydrauliques (HP) pour des raisons de sécurité, ce qui fait qu'il se produit un équilibrage du flux volumique des besoins et du flux volumique refoulé et que l'on atteint ainsi une réduction des vibrations de la pédale de frein (BP).

2. Procédé selon la revendication 1, **caractérisé en ce que** le niveau critique de l'accumulateur basse pression (NDS) est défini en fonction de conditions spécifiques au véhicule, telles que par exemple l'allure du glissement, l'accélération des roues, la pression initiale, le niveau de la pression de blocage, etc., en particulier au moyen de courbes caractéristiques.

3. Procédé selon la revendication 1 ou 2, **caractérisé en ce que** dans le cas d'une phase de montée en pression, le fluide sous pression est refoulé par les pompes hydrauliques (HP) depuis les accumulateurs basse pression (NDS), dans le cylindre principal (HZ), de manière que le flux volumique nécessaire aux besoins du frein de roue (B1, B2) soit très largement fourni par le flux volumique de refoulement de la pompe hydraulique (HP), de sorte qu'il se produit des mouvements aussi faibles que possible de la pédale du fait de différences des flux volumiques.

4. Procédé selon l'une des revendications 1 à 3, **caractérisé en ce que** le flux volumique des besoins du frein de roue (B1, B2) est enregistré sous la forme de courbes caractéristiques de volume.

5. Procédé selon l'une des revendications 1 à 4, **caractérisé en ce que** la pompe hydraulique (HP) est commandée en fonction des courbes caractéristiques de volume.

6. Produit de programme d'ordinateur, **caractérisé en ce que** celui-ci définit un algorithme qui comprend un procédé selon l'une au moins des revendications 1 à 5.
